# EUROPÄISCHE PATENTSCHRIFT

(11) **EP 1 220 004 B1**
(45) Veröffentlichungstag und Bekanntmachung des Hinweises auf die Patenterteilung: **22.03.2006**
(21) Anmeldenummer: 01000771.4
(22) Anmeldetag: 19.12.2001
(51) Int. Cl.: G02B 21/00, G02B 21/18, G02B 23/10

(54) **Einrichtung zur Helligkeitssteuerung von überlagerten Zusatzinformationen in einer optischen Betrachtungseinrichtung**
Device for controlling the luminous intensity of superposed additional information in an optical viewing device
Dispositif de commande de l'intensité lumineuse d'information supplémentaire superposée dans un appareil optique de visualisation

(30) Priorität: 23.12.2000 DE 10064909
(43) Veröffentlichungstag der Anmeldung: 03.07.2002
(73) Patentinhaber: Leica Microsystems (Schweiz) AG, 9435 Heerbrugg (CH)
(72) Erfinder: Spink, Roger, 9442, Berneck (CH)
(74) Vertreter: Rosenich, Paul

(56) Entgegenhaltungen:
- GB-A- 2 119 125
- GB-A- 2 122 385
- US-A- 5 141 313

## Beschreibung

Die Erfindung betrifft eine optische Betrachtungseinrichtung mit einer Informations-Einspiegelung, z.B. ein Stereo-Operationsmikroskop.

Das Einblenden mittels Einspiegelvorrichtungen oder das Überlagern von Informationen in das Beobachtungsfeld optischer Systeme wird in vielen Bereichen mehr und mehr angewandt, da sie zu einem erheblichen Informationsgewinn führt. In klinischen Applikationen geben sie dem Chirurgen die Möglichkeit, weitere visuelle Informationen aufzunehmen, ohne seinen Blickkontakt zum Operationsfeld zu unterbrechen. Dabei kann der Chirurg bei der mikroskopischen Betrachtung des Situs z.B. die Lage und Grösse des Zielobjektes wahrnehmen, typischerweise durch Ueberlagerung des mikroskopischen Zwischenbildes mit Zusatzinformationen - beispielsweise virtuell realen Objektkonturen - mittels Display, Abbildungsoptik und optischem Teiler.

Bei fast allen Applikationen sind Helligkeit, Kontrast und Auflösung des überlagerten Bildes wichtige Qualitätsmerkmale für eine einwandfreie Funktion. Für eine gute Wahrnehmung der Überlagerung muss das eingespiegelte Bildsignal signifikant heller als die optische Abbildung sein. Es darf jedoch auch nicht allzu hell sein, um die Betrachtung des Objektes nicht durch Blendung oder Überstrahlung zu stören.

Bei den heute bekannten Einspiegelvorrichtungen wird das Bild eines entsprechenden Monitors oder LCD-Bildschirms über ein Linsensystem und ein Teilerprisma oder -spiegel in das Zwischenbild des Mikroskopes abgebildet und dem durch das Hauptobjektiv gewonnenen Bild überlagert. Dabei wird üblicherweise die Helligkeit und der Kontrast des eingespiegelten Bildes weder gesteuert noch geregelt.

In der GB 2 119 125 A wird eine Helligkeitssteuerung für in einen Strahlengang einzuspiegelnde Bildinformationen vorgeschlagen, bei der die Bildhelligkeit der eingespiegelten Informationen in Abhängigkeit von den von einem Fotosensor empfangenen Helligkeitsinformationen gesteuert wird. Dabei ist vorgesehen, dass die Helligkeit der eingespiegelten Information über die gesamte Fläche konstant ist. Bei dem Fotosensor kann eine Vorsatzscheibe verwendet werden, durch die unterschiedliche Bildbereiche der mit einer Zusatzinformation zu versehenden Orginalbild-Informationen bei der Helligkeitsansteuerung der eingespiegelten Bildinformationen betont werden können.

Im US-Patent 5,141,313 wird eine Vorrichtung zum Einspielen von zusätzlichen Bildinformationen in einen Objektstrahlengang beschrieben. Die Steuerung steuert eine einzelne Lichtquelle, wie z.B. eine LED an, die die Bild gebende Blende beleuchtet. Diese Blende trägt die eingespiegelte Zusatzinformation.

In der GB 2 122 385 wird eine weitere Einrichtung zum Einspiegeln einer zusätzlichen Bildinformation in einem Strahlengang beschrieben. Die von einer Fotozelle empfangenen Helligkeitsinformationen, über eine mit zusätzlichen Informationen zu versehende Bildinformation, bestimmen die Helligkeit einer Lichtquelle, welche eine flächige Bildinformation, die in den Strahlengang der ursprünglichen Bildinformation eingespiegelt wird, beleuchtet.

Es wurde erkannt, dass diese Systeme nachteilig sind in Bezug auf die folgenden Punkte:
i) Eine fixe Helligkeit der Einspiegelung kann zu Überstrahlungen beziehungsweise zum 'Verschlucken' des Objektbildes führen.
ii) Eine manuelle Helligkeits- und Kontraststeuerung kann nur über das gesamte Bild, nicht aber über einzelne Bereiche beziehungsweise Pixel, erfolgen.
iii) Eine manuelle Helligkeits- und Kontrastregelung führt bei unterschiedlichen Bild-Charakteristiken und -Helligkeiten zu aufwändigen Anpassungen während der Betrachtung.

Der Erfindung liegt somit die Aufgabe zugrunde, eine Verbesserung zu finden, welche die angegebenen Nachteile vermeidet und einen ungestörten, dauernden Blick auf die eingespiegelten Informationen ermöglicht, unabhängig von der Helligkeit beziehungsweise dem Kontrast des abgebildeten Objektes.

Diese Aufgabe wird erfindungsgemäß durch die im Kennzeichen des Patenanspruchs 1 angegebenen Merkmale gelöst. Vorteilhafte Weiterbildungen der Erfindung sind Gegenstand der Unteransprüche.

Für den Steuerungsprozess der Einblendung wird die Grundhelligkeit der Objektabbildung durch Detektion des Objektes, beispielsweise mittels eines CCD oder einer Video-Kamera, sowie die räumliche Helligkeits- und/oder Farbverteilung ermittelt. Die Einstellung der Grundhelligkeit kann dann beispielsweise bei einem LCD oder einem Monitor durch die Regelung der beleuchtenden Lichtquelle erfolgen beziehungsweise bei einem Monitor die Helligkeit eines jeden Überlagerungspixels aufgrund der ermittelten Objekthelligkeit und/oder -farbe am Pixelort x,y.

Damit können in folgenden Schritten die nachstehenden Verbesserungen erreicht werden:
a) Die Helligkeit der gesamten eingespiegelten Information kann der Objekthelligkeit angepasst werden.
b) Die Helligkeit der eingespiegelten Information kann pixelweise der Helligkeit der einzelnen Bereiche der Objektabbildung angepasst werden (Kontraste).
c) Die Anpassung der Gesamthelligkeit des Bildes erfolgt kontinuierlich und automatisch.
d) Die Anpassung an die Kontraste des Bildes erfolgt automatisch entweder zonenweise oder pixelweise.
e) Insgesamt werden dadurch Unterdrückungen dunkler Stellen sowie Überstrahlungen im Objektbild ohne manuellen Eingriff vermieden.
f) Die Gesamthelligkeit sowie der Gesamtkontrast des eingespiegelten Bildes kann bei Bedarf auch manuell und/oder gegebenenfalls fernbedienbar vom jeweiligen Betrachter gesteuert werden.

Eine besondere Weiterentwicklung der Erfindung besteht darin, dass nicht nur die Helligkeit der Einspiegelung der jeweiligen Objekthelligkeit angepasst wird, sondern auch die Farbe. Beispielsweise wird für die Einspiegelung die Kontrastfarbe der Farbe der jeweiligen Objektabbildung gewählt.

Im obigen Text wird zwar auf einen Chirurgen und auf ein Operationsmikroskop beziehungsweise auf ein Operationsfeld Bezug genommen; die Erfindung ist jedoch nicht darauf eingeschränkt. Vielmehr kann es sich auch um andere optische Geräte mit Einspiegelungen handeln, z.B. Projektionen mit eingeblendeter Zusatzinformation, Video- und Fotokameras, monokulare wie auch andere binokulare Anwendungen.

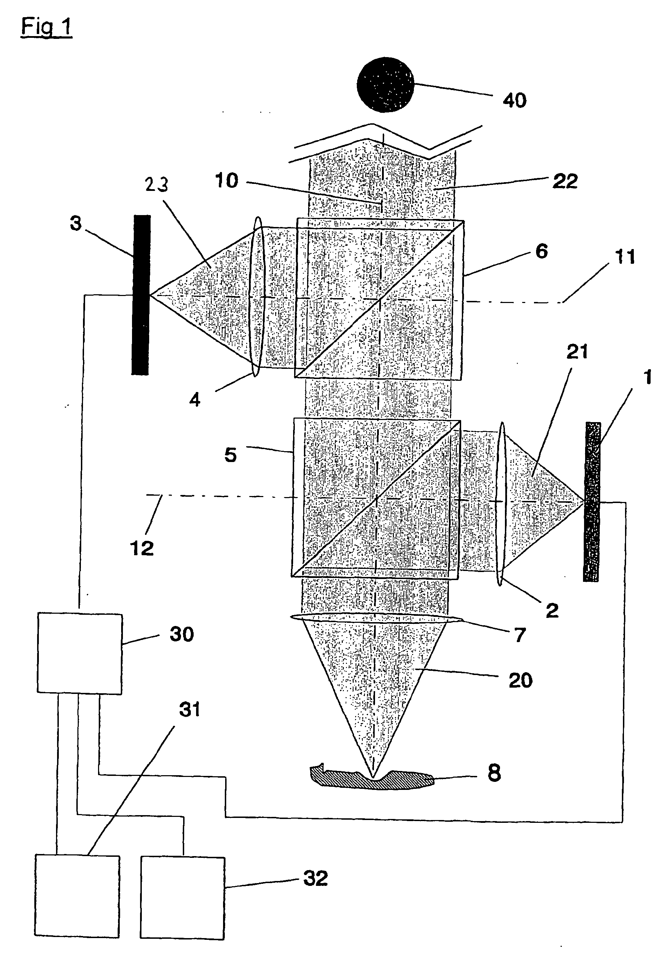

Die Bezugszeichenliste und die Figuren 1, 2 und 3 sind zusammen mit dem Offenbarungsgehalt der Patentansprüche integrierender Bestandteil der Offenbarung dieser Anmeldung.

Die Erfindung soll nachstehend an Hand der schematischen Figuren näher erläutert werden:

Die Figur 1 zeigt symbolisch einen entlang einer Achse 10 verlaufenden Hauptstrahlengang 20, 22 einer Betrachtungseinrichtung für ein Objekt 8. Ein Strahlengang 21 zu einer Bilderkennungseinheit 1 , im folgenden auch als helligkeits und/oder farbempfindlicher Bildaufnehmer bezeichnet, wird nach einer Hauptoptik 7 an einem Strahlenteiler 5 geteilt und entlang einer Achse 12 umgelenkt. Der Strahlengang 23 einer eingespiegelten Information wird für den Betrachter 40 aus der Achse über einen Strahlenteiler 6 in den Hauptstrahlengang 20, 22 eingeblendet. Eine Einblendvorrichtung ist beispielsweise als Display 3 ausgebildet.

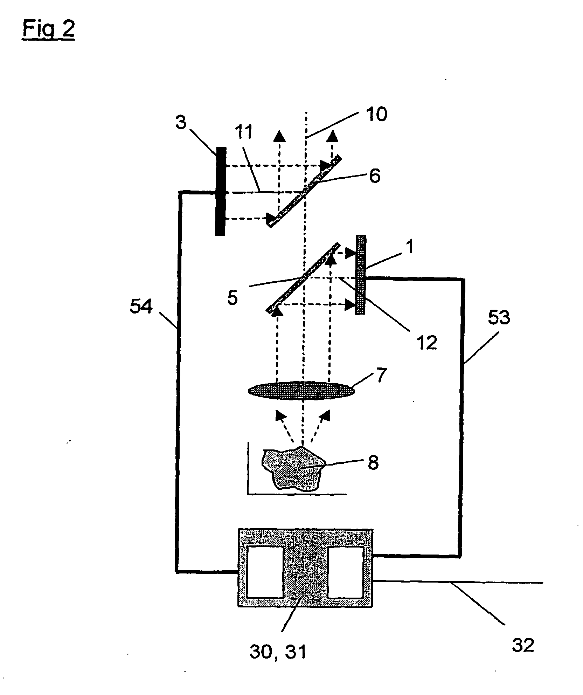

Die Figur 2 zeigt die erfindungsgemäße Helligkeitssteuerung der Einblend- vorrichtung 3, welche die Information einspiegelt, den Regelkreis Helligkeits- und Kontrastmessung 53 des Objektes mittels beispielsweise einer Kamera 1, die Auswertungs- und Steuereinheit 30, 31 mittels beispielsweise eines Rechners, sowie das Input-Signal 54 zu der Einblendvorrichtung 3.

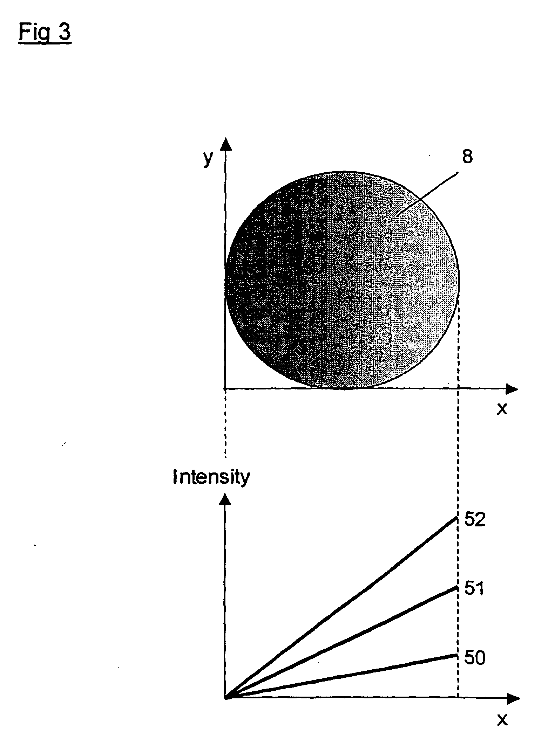

Die Figur 3 zeigt symbolisch ein Beispiel der Auswirkung einer Helligkeitsregelung. Die x,y-Pixel einer Objekt-Abbildung haben eine Helligkeit gemäß Kurve 50. Per Regler wird zur gut sichtbaren Überlagerung die Helligkeit (Intensität) für die Einblendung gemäß Kurve 51 geregelt, so dass sich eine Gesamthelligkeit gemäß Kurve 52 ergibt. Der Kontrast und/oder die Farbe ist/sind somit ausreichend und automatisch angepasst.

### Das in den Figuren dargestellte Gerät funktioniert wie folgt:

Ein Teil des vom zu betrachtenden Objekt 8 ausgehenden Strahlenbündels 20 wird mittels eines Strahlenteilers 5 über eine Optik 2 zu einer Messeinrichtung 1, beispielsweise ein CCD oder eine Video-Kamera, umgelenkt. Das Output-Signal 53 dieser Messeinrichtung wird auf eine Auswertungseinheit 30 - beispielsweise einen Rechner - weitergeleitet.

Mittels der Auswertungseinheit (Rechner) (30) werden die Gesamthelligkeit der Objektabbildung sowie die Kontraste innerhalb der Abbildung zonen- oder pixelweise bestimmt. Aufgrund dieser Helligkeits-, Farb- und Kontrastbestimmung wird eine Einblendvorrichtung, beispielsweise ein Display 3 oder ein Monitor angesteuert, bei welchem die Gesamthelligkeit aufgrund der Objekthelligkeit sowie die Pixel-Intensität aufgrund der Kontraste innerhalb der Objektabbildung festgelegt werden.

Diese helligkeits- und kontrastgesteuerte Information 23 wird über eine Optik 4 und einen Strahlenteiler 6 wiederum in den Hauptstrahlengang 22 eingespiegelt.

Erfindungsgemäß wird damit ein störungs- und überstrahlungsfreies Gesamtbild erzeugt.

Im Rahmen der Erfindung kann entweder eine selbst- oder eine fremdleuchtende Einblendvorrichtung 3 verwendet werden. Unter Einblendvorrichtung im Sinne der vorliegenden Erfindung sind alle Vorrichtungen zu verstehen, die optische Informationen auf die Netzhaut eines Anwenders bringen, also beispielsweise auch Laser-Displays oder dergleichen.

### Bezugszeichenliste

- 1: Bild-Helligkeits- und Kontrast-Messeinrichtung (CCD) / Bilderkennungseinheit / Helligkeitsdetektor
- 2: Optik für die Messeinrichtung
- 3: Einblendvorrichtung (Display, Monitor)
- 4: Optik der Einblendvorrichtung
- 5: Strahlenteiler Output-Signal (CCD)
- 6: Strahlteiler Input-Signal (Display, eingespiegelte Information)
- 7: Hauptoptik
- 8: Objekt
- 10: Achse des Hauptstrahlengangs
- 11: Achse des Input-Strahlenganges (Display)
- 12: Achse des Output-Strahlenganges (CCD)
- 20: Objekt-Strahlengang / Hauptstrahlengang
- 21: Output-Strahlengang (CCD) / Messstrahlengang
- 22: Okular-Strahlengang / Betrachterstrahlengang
- 23: Input-Strahlengang / helligkeits- und kontrastgesteuerte Information

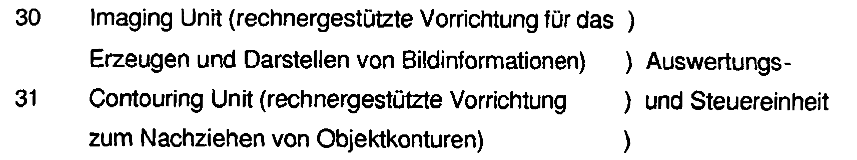

- 32: Manueller Input
- 40: Betrachter
- 50: Helligkeit Objektabbildung / Kurve
- 51: Helligkeit Einblendung / Kurve
- 52: Gesamthelligkeit / Kurve
- 53: Output-Signal (Video) / Regelkreis Helligkeits- und Kontrastmessung
- 54: Input-Signal (zur Einblend-Vorrichtung)

## Patentansprüche

1. Einrichtung zur Helligkeitssteuerung eines einer Objektabbildung von einem Objekt (8) überlagerten optischen Signals mit einem Hauptstrahlengang (20), einem Hauptobjektiv (7), einer Einblendvorrichtung und einem Strahlenteiler (6) zur Einspiegelung eines durch eine Einblendvorrichtung (3) erzeugten Bildsignals in den Hauptstrahlengang (20), beispielsweise an einem Mikroskop wobei die Einrichtung einen Regler aufweist und dem Hauptstrahlengang eine Messeinrichtung zugeordnet ist, die im Betriebszustand über den Regler die Helligkeit und den Kontrast und/oder die Farbe der eingespiegelten Information der Bildhelligkeit und dem Bildkontrast und/oder der Farbe der Objektabbildung in dem Hauptstrahlengang (20) zonenweise anpasst, **dadurch gekennzeichnet, dass** der Regler einen Regelkreis umfasst, wobei der Regelkreis wenigstens einen helligheits- und/oder farbempfindlichen Bildaufnehmer (1), eine Recheneinheit zur zonen- oder pixelweisen automatischen Auswertung der Objekthelligkeit und/oder der Farbe und eine Einheit zur zonen- oder pixelweisen automatischen Steuerung der Helligkeit und/oder der Farbe des durch die der Einblendvorrichtung (3) erzeugten Bildsignals umfasst.

2. Einrichtung nach Anspruch 1, **dadurch gekennzeichnet, dass** die Bildaufnahme direkt vom Objekt (8) durch eine Abbildung auf den helligheits- und/oder farbempfindlichen Bildaufnehmer (1) erfolgt.

3. Einrichtung nach Anspruch 1, **dadurch gekennzeichnet, dass** die Bildaufnahme über einen Teil des Hauptstrahlengangs (20) durch Ausspiegelung und Abbildung auf den helligheits- und/oder farbempfindlichen Bildaufnehmer (1) erfolgt.

4. Einrichtung nach einem der vorhergehenden Ansprüche, **dadurch gekennzeichnet, dass** ein Regelkreis vorgesehen ist, der die Helligkeit und den Kontrast der Einspiegelung in Abhängigkeit von der Objekthelligkeit und dem Objektkontrast regelt.

5. Einrichtung nach einem der vorhergehenden Ansprüche, **dadurch gekennzeichnet, dass** die Messung der Bildhelligkeit im Betriebszustand nach örtlichen Bereichen selektiv - also zonen- oder pixelweise - erfolgt, die Helligkeit der örtlichen Bereiche nach Pixel auflösbar und die Helligkeit der Einspiegelung über die gesamte Bildfläche steuerbar ist.

6. Einrichtung nach einem der vorhergehenden Ansprüche, **dadurch gekennzeichnet, dass** die Helligkeit der Einspiegelung nach örtlichen Bereichen steuerbar ist.

7. Einrichtung nach einem der vorhergehenden Ansprüche, **dadurch gekennzeichnet, dass** die Farbe des auf den Bildaufnehmer abgebildeten Bildes nach Pixel auflösbar ist.

8. Einrichtung nach einem der vorhergehenden Ansprüche, **dadurch gekennzeichnet, dass** die Helligkeit und der Kontrast und/oder die Farbe der Einblendvorrichtung (3) fernbedienbar oder rechnerisch beeinflussbar ist.

9. Einrichtung nach mindestens einem der vorhergehenden Ansprüche, **dadurch gekennzeichnet, dass** die Farbe der Einspiegelung über die gesamte Bildfläche nach örtlichen Bereichen steuerbar ist.

## Claims

1. Device for brightness control of an optical signal superposed on an object image of an object (8), comprising a main beam path (20), a main objective (7), an insertion device and a beam splitter (6) for reflecting an image signal produced by an insertion apparatus (3) into the main beam path (20), for example on a microscope, the device having a regulator, and the main beam path being co-ordinated with a measuring device which, in the operating state, adapts the brightness and the contrast and/or the colour of the information reflected in to the image brightness and the image contrast and/or the colour of the object image in the main beam path (20) zone by zone by means of the regulator, **characterised in that** the regulator comprises a control loop, the control loop comprising at least one brightness- and/or colour-sensitive image sensor (1), a computer unit for zone-by-zone or pixel-by-pixel automatic evaluation of the object brightness and/or of the colour, and a unit for zone-by-zone or pixel-by-pixel automatic control of the brightness and/or of the colour of the image signal produced by the insertion apparatus (3).

2. Device according to claim 1, **characterised in that** the image recording is effected directly from the object (8) by focusing on to the brightness-and/or colour-sensitive image sensor (1).

3. Device according to claim 1, **characterised in that** the image recording is effected via a part of the main beam path (20) by reflecting out and focusing on to the brightness- and/or colour-sensitive image sensor (1).

4. Device according to any of the preceding claims, **characterised in that** a control loop is provided which regulates the brightness and the contrast of the reflection as a function of the object brightness and the object contrast.

5. Device according to any of the preceding claims, **characterised in that** the measurement of the image brightness in the operating state is effected selectively according to local areas, i.e. zone by zone or pixel by pixel, the brightness of the local areas can be resolved pixel by pixel and the brightness of the reflection can be controlled over the total image area.

6. Device according to any of the preceding claims, **characterised in that** the brightness of the reflection can be controlled according to local areas.

7. Device according to any of the preceding claims, **characterised in that** the colour of the image focused on to the image sensor can be resolved pixel by pixel.

8. Device according to any of the preceding claims, **characterised in that** the brightness and the contrast and/or the colour of the insertion apparatus (3) can be remote-controlled or can be influenced computationally.

9. Device according to at least one of the preceding claims, **characterised in that** the colour of the reflection can be controlled over the total image area according to local areas.

## Revendications

1. Dispositif de commande de l'intensité lumineuse d'un signal optique superposé à un image d'objet d'un objet (8), comprenant une marche principale des rayons (20) un objectif principal (7), un dispositif de mélange et un fractionneur des rayons (6) pour mélanger un signal d'image produit par un dispositif de mélange (3) dans la marche principale des rayons (20), par exemple dans un microscope, ledit dispositif comprenant un régulateur et un dispositif de mesurage étant associé à la marche principale des rayons, qui en état de service adapte, par le régulateur, l'intensité lumineuse et le contraste et/ou la couleur de l'information mélangée zone par zone à l'intensité lumineuse et le contraste et/ou la couleur de l'image d'objet dans la marche principale des rayons (20),
**caractérisé en ce que** le régulateur comprend un circuit de réglage, ledit circuit de réglage comprenant au moins un capteur d'image (1) sensible à l'intensité lumineuse et/ou à la couleur, une unité de calcul pour évaluer automatiquement zone par zone ou pixel par pixel l'intensité lumineuse d'objet et/ou la couleur, et une unité pour commander automatiquement zone par zone ou pixel par pixel l'intensité lumineuse d'objet et/ou la couleur du signal d'image produit par le dispositif de mélange (3).

2. Dispositif selon la revendication 1, **caractérisé en ce que** la prise de vue est effectuée directement de l'objet (8) par un image au capteur d'image (1) sensible à l'intensité lumineuse et/ou à la couleur.

3. Dispositif selon la revendication 1, **caractérisé en ce que** la prise de vue est effectuée à travers d'une partie de la marche principale des rayons (20) par une réflexion en dehors et un image au capteur d'image (1) sensible à l'intensité lumineuse et/ou à la couleur.

4. Dispositif selon une quelconque des revendications précédentes, **caractérisé en ce qu'**un circuit de réglage est prévu, qui règle l'intensité lumineuse et le contraste de l'image mélangé en fonction de l'intensité lumineuse d'objet et du contraste d'objet.

5. Dispositif selon une quelconque des revendications précédentes, **caractérisé en ce que** le mesurage de l'intensité lumineuse de l'image, en état de service, est effectué sélectivement selon des zones locaux, donc zone par zone ou pixel par pixel, que l'intensité lumineuse des zones locaux peut être résolue selon les pixels, et que l'intensité lumineuse de l'image mélangé peut être commandée sur toute la surface d'image.

6. Dispositif selon une quelconque des revendications précédentes, **caractérisé en ce que** l'intensité lumineuse de l'image mélangé peut être commandée selon des zones locaux.

7. Dispositif selon une quelconque des revendications précédentes, **caractérisé en ce que** la couleur de l'image représenté au capteur d'image peut être résolue selon les pixels.

8. Dispositif selon une quelconque des revendications précédentes, **caractérisé en ce que** l'intensité lumineuse et le contraste et/ou la couleur du dispositif de mélange (3) peut être commandée à distance ou peut être influencée par un calcule.

9. Dispositif selon au moins une quelconque des revendications précédentes, **caractérisé en ce que** la couleur de l'image mélangé peut être commandée sur toute la surface d'image selon des zones locaux.
